# EUROPÄISCHE PATENTSCHRIFT

(11) **EP 2 880 404 B1**
(45) Veröffentlichungstag und Bekanntmachung des Hinweises auf die Patenterteilung: **10.01.2018**
(21) Anmeldenummer: 13739457.3
(22) Anmeldetag: 23.07.2013
(51) Int. Cl.: G01D 5/244, H02P 29/02, B62D 5/04

(54) **VERFAHREN ZUM ERKENNEN EINES FEHLERFALLS EINER MOTORANORDNUNG MIT EINER ELEKTRISCHEN MASCHINE UND MOTORSTEUERGERÄT**
METHOD TO DETERMINE A FAULT STATE IN AN MOTORSYSTEM COMPRISING AN ELECTRICAL MACHINE AND A MOTOR CONTROLLER
MÉTHODE POUR LA DÉTECTION D'UNE ERREUR DANS UN ENSEMBLE MOTEUR COMPRENANT UNE MACHINE ÉLECTRIQUE ET UNE UNITÉ DE COMMANDE DE MOTEUR

(30) Priorität: 02.08.2012 DE 102012213709
(43) Veröffentlichungstag der Anmeldung: 10.06.2015
(73) Patentinhaber: Continental Automotive GmbH, 30165 Hannover (DE)
(72) Erfinder: TÖNS, Matthias, 93049 Regensburg (DE); BAUMANN, Thomas, 93049 Regensburg (DE)
(86) Internationale Anmeldenummer: PCT/EP2013/065464
(87) Internationale Veröffentlichungsnummer: WO 2014/019882

(56) Entgegenhaltungen:
- EP-A2- 1 291 263
- DE-A1- 10 152 427
- DE-A1-102008 024 527
- DE-A1-102010 053 098
- US-B1- 6 958 620

## Beschreibung

Die vorliegende Erfindung betrifft ein Verfahren zum Erkennen eines Fehlerfalls einer Motoranordnung mit einer elektrischen Maschine, insbesondere eines Synchronmotors, sowie ein Motorsteuergerät zum Steuern einer elektrischen Maschine, insbesondere eines Synchronmotors, mit einer Fehlererkennungseinheit zum Erkennen eines Fehlerfalls der Motoranordnung. Darüber hinaus betrifft die Erfindung eine Motoranordnung mit einer elektrischen Maschine, insbesondere einem Synchronmotor, und einem Motorsteuergerät.

In modernen Kraftfahrzeugen werden zunehmend elektrische Maschinen, wie z. B. Synchronmotoren, als Antriebsmotoren eingesetzt. Zur Regelung der elektrischen Maschine sind in Elektro- oder Hybridfahrzeugen häufig Drehwinkelsensoren an der elektrischen Maschine angeordnet, die die Drehzahl und den Drehwinkel des Rotors und der elektrischen Maschine erfassen. Ein solcher Drehwinkelsensor ist z. B. aus der DE 102 10 372 A1 bekannt.

Ein Drehwinkelsensor kann beispielsweise ein Sensorelement und eine Sensorscheibe aufweisen, wobei die Sensorscheibe eine Signalspur mit einer bekannten Form hat. Ist die Signalspur beispielsweise sinusförmig, so liefert der Drehwinkelsensor ein sinusförmiges Signal. Meist weist ein Drehwinkelsensor mit einer sinusförmigen Signalspur ein weiteres Sensorelement auf, welches in einem Abstand von 90° zu dem ersten Sensorelement angebracht ist und daher ein cosinusförmiges Signal liefert. Aus diesen beiden Signalen, d. h. dem Sinussignal und dem Cosinussignal, kann der Drehwinkel unter Verwendung des Arcustangens berechnet werden. Der Drehwinkel des Rotors der elektrischen Maschine kann insbesondere für eine feldorientierte Regelung der elektrischen Maschine benötigt werden.

Aus der Druckschrift EP 1 291 263 A2 ist ein Steuerverfahren für eine elektrische Servolenkung mit einem Motor zur Unterstützung einer Lenkkraft auf der Basis eines einer Lenkwelle erteilten Lenkmoments bekannt.

Aus der Druckschrift DE 10 2010 053 098 A1 ist ein Verfahren zur Überwachung eines Rotorlagegebers bekannt, wobei der Rotorlagegeber ein Rotorlagesignal eines elektrischen Antriebs bereitstellt.

Aus der Druckschrift DE 101 52 427 A1 ist eine Erfassung einer Anomalie für eine Positionserfassungsvorrichtung bekannt, die imstande ist, Anomalie genau und preiswert zu erfassen. Die Vorrichtung erfasst die Anomalie der Positionserfassungsvorrichtung, wenn das phasenmodulierte Signal einen Spitzenwert hat, der außerhalb eines vorbestimmten Bereichs ist.

Aus der Druckschrift US 6 958 620 B1 ist eine Diagnose von Fehlfunktionen, wie z. B. einem Leitungsbruch von Drehmeldewicklungen, unter Verwendung eines einfachen Schaltungsaufbaus bekannt.

Aus der Druckschrift DE 10 2008 024 527 A1 ist ein Verfahren zur Überwachung eines Drehwinkelaufnehmers an einer elektrischen Maschine bekannt, welches in Messsystemen Anwendung findet.

Aus der Druckschrift DE 10 2010 024 688 A1 ist eine Steueranordnung zur Ansteuerung einer elektrischen Antriebseinrichtung bekannt, die einen Stator und einen zum Stator relativbeweglichen Läufer umfasst.

Aus der Druckschrift DE 3 931 143 A1 ist ein Verfahren zur Überwachung des Betriebs einer Werkzeugmaschine, vorzugsweise zur spanabhebenden Bearbeitung, bekannt.

Aus der Druckschrift DE 10 2010 024 238 A1 ist ein Verfahren zur Überwachung einer bewegungsgesteuerten Maschine, insbeson dere eines Manipulators, mit einem elektronisch kommutierten Antriebsmotor bekannt.

Aus der Druckschrift DE 10 2005 012 779 A1 ist ein Verfahren zur Ansteuerung eines Elektromotors insbesondere eines EC-Motors mit einem Rotor bekannt, wobei die Position und Drehrichtung des Rotors durch elektronische Sensorsignale erfasst wird, wobei in Abhängigkeit des Vorliegens von mindestens einem fehlerhaften Sensorsignal ein Notlaufverfahren durchgeführt wird.

Aus der Druckschrift DE 10 2006 042 038 B3 ist ein Verfahren zur sicheren Drehmomentbegrenzung eines feldorientiert betriebenen, umrichtergespeisten Drehstrommotors bekannt.

Aus der Druckschrift DE 10 2004 019 284 A1 ist eine Vorrichtung zum Betrieb eines Synchronmotors bekannt, welche eine erste Überwachungseinheit umfasst, in welcher zur Generierung eines ersten Steuersignals in Abhängigkeit der Messwerte eines Messgebers die Einhaltung eines Grenzwerts der Geschwindigkeit des Synchronmotors überprüft wird.

Aus Sicherheitsgründen muss die korrekte Funktion der elektrischen Maschine permanent überwacht werden. Aus der EP 1 479 157 B1 beispielsweise ist ein Verfahren zur Fehlererkennung für Elektromotoren im Kraftfahrzeugbereich bekannt.

Es ist eine Aufgabe der vorliegenden Erfindung ein Verfahren sowie ein dazugehöriges Motorsteuergerät zum Erkennen eines Fehlerfalls einer Motoranordnung mit einer elektrischen Maschine anzugeben, das mindestens einen Fehler kostengünstig und verlässlich erkennen kann. Eine weitere Aufgabe besteht darin, eine dazugehörige Motoranordnung bereit zu stellen.

Diese Aufgabe wird gelöst durch ein Verfahren nach Anspruch 1, ein Motorsteuergerät nach Anspruch 3 sowie eine Motoranordnung nach Anspruch 4. Die abhängigen Patentansprüche geben Ausführungsformen der Erfindung an.

Dementsprechend umfasst die Erfindung ein Verfahren zum Erkennen eines Fehlerfalls einer Motoranordnung mit einer elektrischen Maschine, insbesondere eines Synchronmotors, mit den Schritten Ermitteln von Drehwinkeldaten, die in Abwesenheit des Fehlerfalls von einem Drehwinkel eines Rotors der elektrischen Maschine abhängig sind, Ermitteln zusätzlicher Daten, die Rückschlüsse auf den Fehlerfall erlauben, und Erkennen des Fehlerfalls, wenn die Drehwinkeldaten ein erstes Kriterium und die zusätzlichen Daten ein zweites Kriterium erfüllen.

Dabei können die Drehwinkeldaten das erste Kriterium insbesondere dann erfüllen, wenn sie im Wesentlichen einem vorherbestimmten Drehwinkel entsprechen. Wenn der Sinus- und Cosinuspfad des Drehwinkelsensors und der dazugehörigen Auswerteelektronik auf Seiten des Motorsteuergerätes identisch ausgelegt sind, kann der vorherbestimmte Drehwinkel beispielsweise bei 45° liegen.

Wenn einem Drehwinkelsensor der elektrischen Maschine seine Verbindung zur Masse verloren geht, liefert der Drehwin kelsensor immer noch Sensorsignale, die zwar konstant und vom Drehwinkel des Rotors unabhängig sind, aber dennoch durch eine Verarbeitungseinheit des Motorsteuergeräts interpretiert werden. Die Verarbeitungseinheit ermittelt also einen Winkel, der dem Drehwinkel des Rotors nicht entspricht, aber dennoch in einem normalen Betrieb der elektrischen Maschine auftreten könnte. Durch das Ermitteln zusätzlicher Daten kann, wenn sich ein charakteristischer Winkel einstellt, der auf einen möglichen Verlust der Verbindung zwischen Drehwinkelsensor und Masse hinweist, überprüft werden, ob wirklich der entsprechende Fehlerfall vorliegt. Es wird also erst dann der Fehlerfall festgestellt, wenn die Drehwinkeldaten ein erstes Kriterium und die zusätzlichen Daten ein zweites Kriterium erfüllen.

Wie bereits erwähnt, weisen elektrische Maschinen zumeist einen Drehwinkelsensor auf, der Sensorsignale bereitstellt, aus denen ein Drehwinkel eines Rotors der elektrischen Maschine abgeleitet werden kann. Dementsprechend kann der Schritt des Ermittelns von Drehwinkeldaten die Schritte umfassen Messen eines Wertes eines Sensorsignals, wobei der Wert des Sensorsignals indikativ für den Drehwinkel ist, und Berechnen des Drehwinkels basierend auf dem gemessenen Wert des Sensorsignals, um die Drehwinkeldaten zu ermitteln.

Wie bereits beschrieben, tritt der vorherbestimmte Drehwinkel auch in einem normalen Betrieb ohne Fehlerfall auf. Dementsprechend kann das erfindungsgemäße Verfahren die Schritte aufweisen Prüfen, ob die Drehwinkeldaten das erste Kriterium erfüllen, und, wenn die Drehwinkeldaten das erste Kriterium erfüllen, Prüfen, ob die Drehwinkeldaten konstant sind. Beispielsweise können, wenn der vorherbestimmte Drehwinkel erkannt wird, nach einer gewissen festgelegten Zeitspanne noch einmal Drehwinkeldaten bestimmt werden, um zu überprüfen, ob diese weiterhin dem vorherbestimmten Drehwinkel entsprechen.

In einer Ausführungsform umfasst der Schritt des Ermittelns zusätzlicher Daten den Schritt Erfassen einer Drehmomentanforderung als zusätzliche Daten, wenn die Drehwinkeldaten das erste Kriterium erfüllen. Wenn die Drehwinkeldaten beispielsweise dem vorherbestimmten Drehwinkel entsprechen, wird also überprüft, ob eine Drehmomentanforderung an die elektrische Maschine vorliegt. Eine solche Drehmomentanforderung liegt z. B. vor, wenn der Fahrer des Fahrzeugs auf das Gaspedal tritt.

Bei einer Ausführungsform wird der Schritt des Erfassens einer Drehmomentanforderung mindestens zweimal durchlaufen und das erfindungsgemäße Verfahren umfasst weiterhin die Schritte Bestimmen einer maximalen und einer minimalen Drehmomentanforderung aufgrund der erfassten Drehmomentanforderungen, Berechnen einer Differenz zwischen der maximalen und der minimalen Drehmomentanforderung und Prüfen, ob die berechnete Differenz das zweite Kriterium erfüllt. Insbesondere kann überprüft werden, ob die berechnete Differenz einen vorherbestimmten Schwellwert übersteigt.

Vorzugsweise wird, wenn die berechnete Differenz das zweite Kriterium erfüllt, noch einmal geprüft, ob die Drehwinkeldaten immer noch das erste Kriterium erfüllen. Wenn die Drehwinkeldaten im Wesentlichen dem vorherbestimmten Drehwinkel entsprechen, wird also ermittelt, ob der Fahrer des Kraftfahrzeuges das Gaspedal betätigt und ob sich dadurch der Drehwinkel des Rotors der elektrischen Maschine verändert. Liegt eine Drehmomentanforderung vor, ohne dass sich der Drehwinkel des Rotors verändert, kann auf den Fehlerfall geschlossen werden. Denn ein solcher Fall kann bei einem funktionierenden Drehwinkelsensor nicht vorkommen, weil sich der Rotor auch im festgebremsten Fahrzeug in Folge der weichen Motoraufhängung im Fahrzeug ausreichend drehen würde.

In einer Ausführungsform umfasst der Schritt des Ermittelns zusätzlicher Daten den Schritt Ermitteln einer Drehzahl der elektrischen Maschine aufgrund der ermittelten Drehwinkeldaten.

Der Schritt des Ermittelns einer Drehzahl der elektrischen Maschine kann insbesondere die Schritte umfassen Ermitteln von ersten Drehwinkeldaten, Warten für eine vorherbestimmte erste Zeitspanne, Ermitteln von zweiten Drehwinkeldaten und Ermitteln der Drehzahl der elektrischen Maschine aufgrund der ersten und zweiten Drehwinkeldaten sowie der vorherbestimmten ersten Zeitspanne.

Auf diese Weise kann der Drehwinkelsensor auch für die Ermittlung einer Drehzahl der elektrischen Maschine wiederverwendet werden.

In einer Ausführungsform wird der Schritt des Ermittelns einer Drehzahl zweimal durchlaufen, so dass der Schritt des Ermittelns zusätzlicher Daten die Schritte umfasst Ermitteln einer ersten Drehzahl, Warten für eine vorherbestimmte zweite Zeitspanne, Ermitteln einer zweiten Drehzahl und Ermitteln einer Änderungsrate der ermittelten Drehzahlen als zusätzliche Daten aufgrund der ersten und zweiten Drehzahl sowie der vorherbestimmten zweiten Zeitspanne. Anschließend wird geprüft, ob die ermittelte Änderungsrate das zweite Kriterium erfüllt. Insbesondere kann überprüft werden, ob die ermittelte Änderungsrate einen vorherbestimmten Änderungsratenschwellwert übersteigt.

Wenn der Fehlerfall während der Fahrt auftritt, würde sich die gemessene Drehzahl plötzlich ändern. Wenn sich daraufhin die Drehwinkeldaten derartig ändern, dass sie das erste Kriterium erfüllen, kann auf das Vorliegen des Fehlerfalles geschlossen werden. Vorzugsweise durchläuft das Verfahren also nach einer plötzlichen Veränderung der Drehzahl den Schritt Prüfen, ob die Drehwinkeldaten das erste Kriterium erfüllen, und, wenn die Drehwinkeldaten das erste Kriterium erfüllen, Prüfen, ob die Drehwinkeldaten konstant sind. Wenn die Drehwinkeldaten das erste Kriterium und die zusätzlichen Daten das zweite Kriterium erfüllen, wird der Fehlerfall erkannt.

Mit Hilfe des erfindungsgemäßen Verfahrens kann als Fehlerfall ein Verlust einer Verbindung eines Drehwinkelsensors zum Ermitteln von Drehwinkeldaten mit einer Masse erkannt werden.

Darüber hinaus umfasst die vorliegende Erfindung ein Motorsteuergerät zum Steuern einer elektrischen Maschine, insbesondere eines Synchronmotors, in einer Motoranordnung. Dieses Motorsteuergerät weist mindestens einen Eingang zum Empfangen von Sensorsignalen zum Ermitteln von Drehwinkeldaten auf, die in Abwesenheit des Fehlerfalls von einem Drehwinkel eines Rotors der elektrischen Maschine abhängig sind. Zusätzlich umfasst das Motorsteuergerät Mittel zum Ermitteln zusätzlicher Daten, die Rückschlüsse auf einen Fehlerfall der Motoranordnung erlauben, und eine Fehlererkennungseinheit zum Erkennen des Fehlerfalls, wenn die Drehwinkeldaten ein erstes Kriterium und die zusätzlichen Daten ein zweites Kriterium erfüllen.

Das Motorsteuergerät kann eine Verarbeitungseinheit und einen Datenspeicher aufweisen, der ein durch die Verarbeitungseinheit ausführbares Programm enthält, das Instruktionen zur Ausführung des erfindungsgemäßen Verfahrens umfasst.

Darüber hinaus umfasst die vorliegende Erfindung eine Motoranordnung mit einer elektrischen Maschine, insbesondere einem Synchronmotor, die einen Drehwinkelsensor aufweist, der über eine Leitung mit einer Masse verbunden ist, sowie mit einem erfindungsgemäßen Steuergerät, das dazu eingerichtet ist, einen Verlust der Verbindung des Drehwinkelsensors mit der Masse zu erkennen.

Weitere Details und Vorteile von Ausführungsformen der Erfindung werden im Folgenden mit Bezug auf die Figuren erläutert.

### Dabei zeigen

- Figur 1: eine Motoranordnung nach dem Stand der Technik;
- Figur 2: einen Signalverlauf der Signale einer Ausführungsform eines Drehwinkelsensors;
- Figur 3: ein Motorsteuergerät gemäß der vorliegenden Erfindung in Interaktion mit einem Drehwinkelsensor;
- Figur 4: eine erste Ausführungsform eines erfindungsgemäßen Verfahrens sowie
- Figur 5: eine zweite Ausführungsform eines erfindungsgemäßen Verfahrens.

In der folgenden Beschreibung werden gleiche und gleichwirkende Elemente, sofern nichts anderes angegeben ist, mit denselben Bezugszeichen versehen.

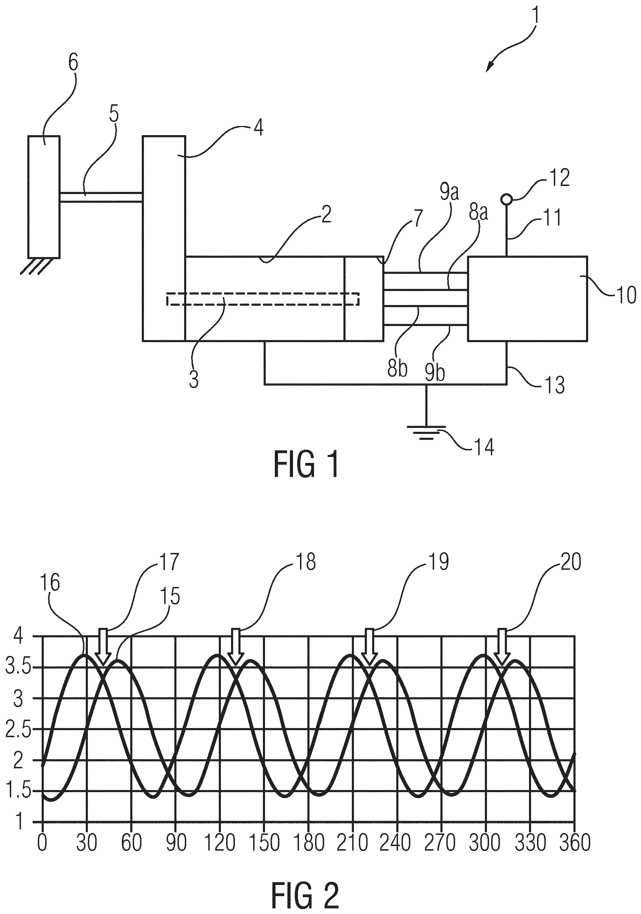

Figur 1 zeigt eine Motoranordnung 1 nach dem Stand der Technik. Diese weist eine elektrische Maschine 2 auf, deren nicht gezeigter Rotor drehfest mit der Welle 3 verbunden ist. Die Welle 3 treibt den Antriebsstrang 4 an. Dieser kann beispielsweise ein Getriebe, eine Kupplung, einen Verbrennungsmotor sowie Nebenaggregate aufweisen. Das durch die elektrische Maschine 2 erzeugte Drehmoment wird vom Antriebsstrang 4 über jeweils eine Achswelle auf Räder des Kraftfahrzeugs übertragen. Zur Vereinfachung sind exemplarisch nur eine Achswelle 5 und ein Rad 6 gezeigt.

Die elektrische Maschine 2 weist einen Drehwinkelsensor 7 auf, der mit der Welle 3 verbunden ist und seine Sensorsignale über zwei Leitungen 8a, 8b an ein Motorsteuergerät 10 überträgt. Dabei wird über die Leitung 8a das Sinussignal und über die Leitung 8b das Cosinussignal übertragen.

Über die Leitung 11 wird das Motorsteuergerät 10 mit einer Versorgungsspannung 12 versorgt. Die Masseleitung 13 verbindet die elektrische Maschine 2 und das Motorsteuergerät 10 mit der Masse 14. Über die Leitung 9a wird der Drehwinkelsensor 7 vom Motorsteuergerät 10 mit einer Spannung versorgt und die Leitung 9b dient für den Drehwinkelsensor 7 als Masseanschluss.

Wenn in dieser Motoranordnung 1 nach dem Stand der Technik die Leitung 9b bricht und der Drehwinkelsensor 7 keine Verbindung zur Masse mehr besitzt, so wird diese Leitungsunterbrechung nicht erkannt. Wenn die Schaltungen zur Auswertung des Sinussignals und des Cosinussignals jeweils identisch ausgestaltet sind, geht das Motorsteuergerät 10 davon aus, dass der Drehwinkel des Rotors der elektrischen Maschine 2 bei 45° liegt, da die Spannungen, die auf der Leitung 8a und 8b übertragen werden, jeweils gleich groß sind. Wie die Figur 2 zeigt, wird der Punkt, bei dem die Spannung des Sinussignals und des Cosinussignals gleich groß sind jedoch als ein Winkel von 45° betrachtet.

Figur 2 illustriert diesen Zusammenhang. Auf der Ordinatenachse sind die Spannungswerte des Sinussignals 15 und des Cosinussignals 16 aufgetragen. Auf der Abszissenachse ist der Drehwinkel des Rotors dargestellt. Wie die Pfeile 17 bis 20 verdeutlichen, sind die Spannungswerte des Sinussignals 15 und des Cosinussignals 16 jeweils bei einem Drehwinkel des Rotors von 45° plus 90° mal x gleich groß, wobei x eine natürliche Zahl ist. Dies ist jedoch ein Spezialfall und kann bei anderen Ausführungsformen eines Drehwinkelsensors durchaus anders sein. Der Spannungswert liegt an den Schnittpunkten im vorliegenden Beispiel bei etwa 3,3 Volt.

Ein Zustand, bei dem die Spannungswerte des Sinussignals 15 und des Cosinussignals 16 gleich groß sind, wird bei einem sich drehenden Rotor somit regelmäßig durchfahren. Auch bei einem stehenden Fahrzeug, z. B. am Berg, kann ein solcher Zustand über längere Zeit auftreten, so dass die Erkennung eines Verlustes einer Verbindung zur Masse nicht einfach ist.

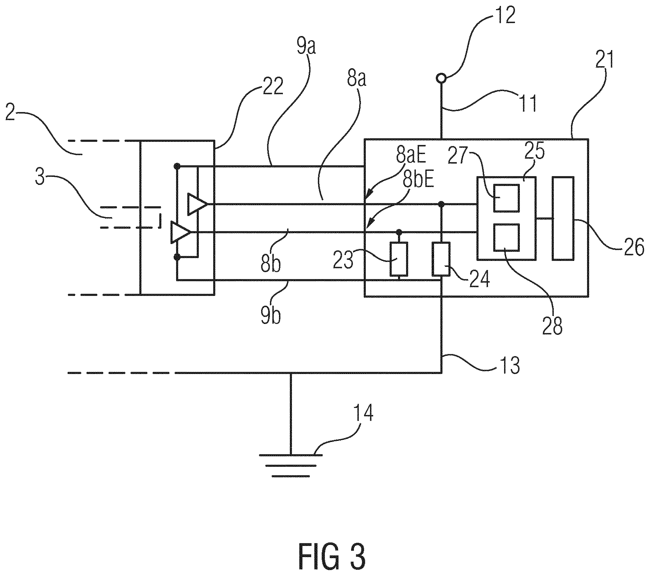

Figur 3 zeigt eine Ausführungsform eines erfindungsgemäßen Motorsteuergeräts 21 mit einem Drehwinkelsensor 22. Das Motorsteuergerät 21 umfasst einen ersten Eingang 8aE zum Empfangen des Sinussignals und einen zweiten Eingang 8bE zum Empfangen des Cosinussignals. Aus dem Sinus- und Cosinus-Signal können Drehwinkeldaten ermittelt werden, die in Abwesenheit des Fehlerfalls von einem Drehwinkel des Rotors der elektrischen Maschine abhängig sind. Das Motorsteuergerät 21 wird über die Leitung 11 mit einer Versorgungsspannung 12 versorgt und ist über die Masseleitung 13 mit der Masse 14 verbunden. Der Drehwinkelsensor 22 wird vom Motorsteuergerät 21 über die Leitung 9a mit einer Spannung versorgt und ist über die Leitung 9b mit Masse verbunden. Der Drehwinkelsensor 22 überträgt über eine erste Leitung 8a ein Sinussignal und über eine zweite Leitung 8b ein Cosinussignal an das Motorsteuergerät 21. Die erste und zweite Leitung 8a und 8b sind über einen ersten Widerstand 23 und einem zweiten Widerstand 24 mit der Masseleitung 13 verbunden. Die über den ersten und zweiten Widerstand 23, 24 abfallende Spannung wird von einer Verarbeitungseinheit 25 des Motorsteuergeräts ausgewertet. Hierfür führt die Verarbeitungseinheit ein Programm aus, das in einem Datenspeicher 26 gespeichert ist. Die Verarbeitungseinheit 25 umfasst Mittel zum Ermitteln zusätzlicher Daten, 27, die Rückschlüsse auf einen Fehlerfall der Motoranordnung erlauben. Diese Mittel 27 können beispielsweise Programmanteile umfassen oder auch einen Eingang zum Empfangen einer oder mehrerer Drehmomentanforderungen als zusätzliche Daten. Darüber hinaus umfasst die Verarbeitungseinheit 25 eine Fehlererkennungseinheit 28 zum Erkennen des Fehlerfalls, wenn die Drehwinkeldaten ein erstes Kriterium und die zusätzlichen Daten ein zweites Kriterium erfüllen.

Aus Gründen der einfachen Darstellung sind in Figur 1 eine Leistungselektronik und die entsprechenden Verbindungen zwischen dem Motorsteuergerät 10 und der elektrischen Maschine 2 nicht gezeigt. Diese sind dem Fachmann geläufig und werden durch die vorliegende Erfindung nicht geändert.

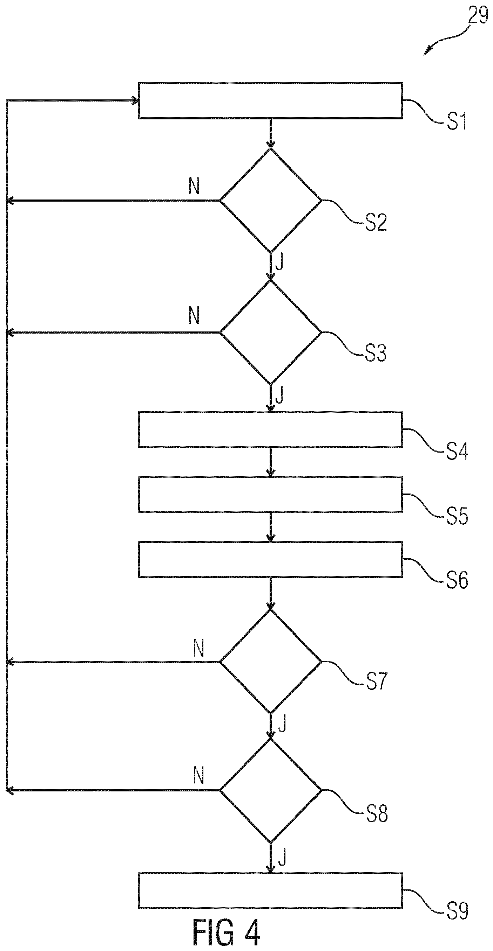

Figur 4 illustriert eine erste Ausführungsform 29 eines erfindungsgemäßen Verfahrens zum Erkennen eines Fehlerfalls einer elektrischen Maschine. In Schritt S1 werden Drehwinkeldaten ermittelt, die in Abwesenheit des Fehlerfalls von einem Drehwinkel des Rotors der elektrischen Maschine abhängig sind. In dem darauffolgenden Schritt S2 wird dann geprüft, ob die in Schritt S1 ermittelten Drehwinkeldaten das erste Kriterium erfüllen. Das erste Kriterium kann beispielsweise dann erfüllt sein, wenn bei einer gleichen Dimensionierung des ersten und zweiten Widerstandes 23, 24 sich ein Drehwinkel von im Wesentlichen 45° einstellt. Wenn das erste Kriterium durch die Drehwinkeldaten erfüllt wird, wird zu Schritt S3 verzweigt. Ansonsten wird zu Schritt S1 zurückgesprungen. In Schritt S3 wird geprüft, ob die Drehwinkeldaten konstant sind. Das kann beispielsweise dadurch erfolgen, dass für eine vorherbestimmte Zeitspanne gewartet wird und dann noch einmal aktuelle Drehwinkeldaten ermittelt werden. Wenn die Drehwinkeldaten konstant sind wird mit Schritt S4 fortgefahren. Ansonsten wird zu Schritt S1 zurückgesprungen.

In Schritt S4 werden mindestens zwei Drehmomentanforderungen als zusätzliche Daten erfasst. Innerhalb der erfassten Drehmomentanforderungen wird in Schritt S5 eine maximale und eine minimale Drehmomentanforderung bestimmt. In Schritt S6 wird zwischen der maximalen und der minimalen Drehmomentanforderung eine Differenz berechnet. Anschließend wird in Schritt S7 geprüft, ob die berechnete Differenz das zweite Kriterium erfüllt. Das zweite Kriterium ist im vorliegenden Beispiel erfüllt, wenn die berechnete Differenz einen vorherbestimmten Differenzschwellwert übersteigt. Wenn das zweite Kriterium durch die berechnete Differenz erfüllt wird, wird mit Schritt S8 fortgefahren. Ansonsten wird zu Schritt S1 zurückgekehrt.

In Schritt S8 wird geprüft, ob die Drehwinkeldaten immer noch das erste Kriterium erfüllen. Hierfür müssen die Drehwinkeldaten natürlich noch einmal ermittelt werden. Wenn die Drehwinkeldaten das erste Kriterium immer noch erfüllen, wird zu Schritt S9 verzweigt, in dem der Fehlerfall erkannt wird. Ansonsten wird zu Schritt S1 zurückgesprungen.

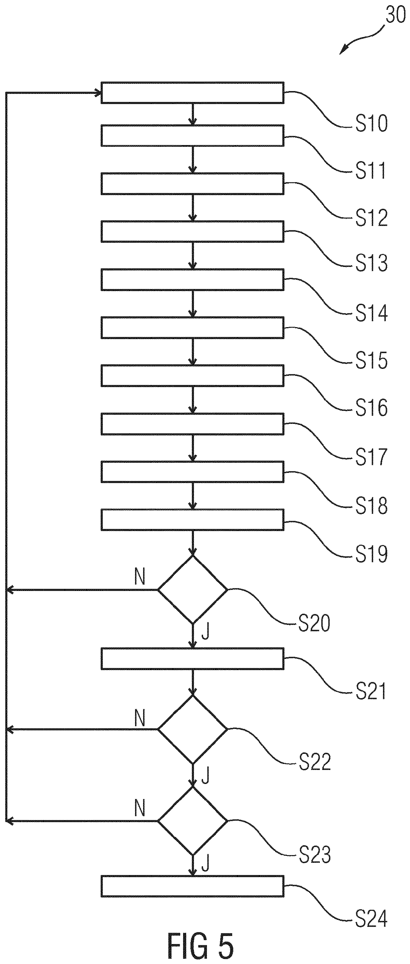

Figur 5 illustriert eine zweite Ausführungsform 30 des erfindungsgemäßen Verfahrens zum Erkennen eines Fehlers einer Motoranordnung mit einer elektrischen Maschine. In Schritt S10 werden erste Drehwinkeldaten ermittelt. In Schritt S11 wird für eine vorherbestimmte erste Zeitspanne gewartet, bevor in Schritt S12 zweite Drehwinkeldaten ermittelt werden. Basierend auf den ersten und zweiten Drehwinkeldaten sowie der vorherbestimmten ersten Zeitspanne wird in Schritt S13 eine erste Drehzahl der elektrischen Maschine bestimmt.

In Schritt S14 wird dann für eine vorherbestimmte zweite Zeitspanne gewartet. Darauf werden in Schritt S15 dritte Drehwinkeldaten bestimmt. In Schritt S16 wird dann wiederum für eine vorherbestimmte erste Zeitspanne gewartet, bevor in Schritt S17 vierte Drehwinkeldaten ermittelt werden. Basierend auf den dritten und vierten Drehwinkeldaten sowie der vorherbestimmten ersten Zeitspanne wird in Schritt S18 dann eine zweite Drehzahl bestimmt. In Schritt S19 wird dann aufgrund der ersten und zweiten Drehzahl sowie der vorherbestimmten zweiten Zeitspanne eine Änderungsrate der ermittelten Drehzahlen als zusätzliche Daten ermittelt.

In Schritt S20 wird geprüft, ob die ermittelte Änderungsrate das zweite Kriterium erfüllt. Im vorliegenden Beispiel wird geprüft, ob die ermittelte Änderungsrate einen vorherbestimmten Änderungsratenschwellwert übersteigt. Wenn dies der Fall ist, wird zu Schritt S21 verzweigt. Ansonsten wird zu Schritt S10 zurückgesprungen. In Schritt S21 werden erneut Drehwinkeldaten ermittelt. In Schritt S22 wird geprüft, ob die in Schritt S21 ermittelten Drehwinkeldaten das erste Kriterium erfüllen. Im gezeigten Beispiel wird geprüft, ob die Drehwinkeldaten im Wesentlichen einem vorherbestimmten Drehwinkel, z. B. 45°, entsprechen. Sollte dies der Fall sein, wird zu Schritt S23 verzweigt. Ansonsten wird zu Schritt S10 zurückgesprungen. In Schritt S23 wird dann geprüft, ob die Drehwinkeldaten konstant sind. Dies kann beispielsweise dadurch geschehen, dass für eine vorherbestimmte Zeitspanne gewartet wird, die Drehwinkeldaten dann noch einmal bestimmt und anschließend entschieden wird, ob diese immer noch dem ersten Kriterium entsprechen. Sollten die Drehwinkeldaten konstant sein, wird zu Schritt S24 verzweigt, in dem der Fehlerfall erkannt wird. Ansonsten wird zu Schritt S10 zurückgesprungen.

Während sich die erste Ausführungsform 29 insbesondere für ein stehendes Fahrzeug eignet, kann die zweite Ausführungsform 30 insbesondere bei einem fahrenden Fahrzeug Verwendung finden.

Durch die vorliegende Erfindung kann der Verlust einer Verbindung des Drehwinkelsensors mit der Masse schnell erkannt werden. Hierfür ist keine zusätzliche Hardware nötig, die den Sensorversorgungsstrom überwacht. Stattdessen kann das Verfahren als reine Softwareerweiterung implementiert werden.

Die mit Bezug auf die Figuren gemachten Erläuterungen sind rein illustrativ und nicht beschränkend zu verstehen. An den beschriebenen Ausführungsformen können viele Änderungen vorgenommen werden, ohne den Schutzbereich der Erfindung, wie er in den beigefügten Ansprüchen dargelegt ist, zu verlassen. Die Merkmale der Ausführungsformen können miteinander kombiniert werden, um so weitere für den Anwendungsfall optimierte Ausführungsformen bereitzustellen.

### Bezugszeichenliste

- 1: Motoranordnung
- 2: elektrische Maschine
- 3: Welle
- 4: Antriebsstrang
- 5: Achswelle
- 6: Rad
- 7: Drehwinkelsensor
- 8a: Leitung zur Übertragung des Sinussignals
- 8aE: Eingang zum Empfangen von Sensorsignalen
- 8b: Leitung zur Übertragung des Cosinussignals
- 8bE: Eingang zum Empfangen von Sensorsignalen
- 9a: Leitung zur Versorgung des Drehwinkelsensors mit Spannung
- 9b: Masseanschluss des Drehwinkelsensors
- 10: Motorsteuergerät
- 11: Leitung
- 12: Versorgungsspannung
- 13: Masseleitung
- 14: Masse
- 15: Sinussignal
- 16: Cosinussignal
- 17-20: Schnittpunkte zwischen Sinussignal und Cosinussignal
- 21: Motorsteuergerät
- 22: Drehwinkelsensor
- 23: erster Widerstand
- 24: zweiter Widerstand
- 25: Verarbeitungseinheit
- 26: Datenspeicher
- 27: Mittel zum Ermitteln zusätzlicher Daten
- 28: Fehlererkennungseinheit
- 29: erste Ausführungsform eines erfindungsgemäßen Verfahrens
- 30: zweite Ausführungsform des erfindungsgemäßen Verfahrens
- S1: Ermitteln von Drehwinkeldaten
- S2: Prüfen, ob die Drehwinkeldaten das erste Kriterium erfüllen
- S3: Prüfen, ob die Drehwinkeldaten konstant sind
- S4: Erfassen von mindestens zwei Drehmomentanforderungen
- S5: Bestimmen einer maximalen und einer minimalen Drehmomentanforderung
- S6: Berechnen einer Differenz zwischen der maximalen und der minimalen Drehmomentanforderung
- S7: Prüfen, ob die berechnete Differenz das zweite Kriterium erfüllt
- S8: Prüfen, ob die Drehwinkeldaten das erste Kriterium erfüllen
- S9: Erkennen des Fehlerfalls
- S10: Ermitteln von ersten Drehwinkeldaten
- S11: Warten für eine vorherbestimmte erste Zeitspanne
- S12: Ermitteln von zweiten Drehwinkeldaten
- S13: Ermitteln einer ersten Drehzahl der elektrischen Maschine
- S14: Warten für eine vorherbestimmte zweite Zeitspanne
- S15: Ermitteln von dritten Drehwinkeldaten
- S16: Warten für eine vorherbestimmte erste Zeitspanne
- S17: Ermitteln von vierten Drehwinkeldaten
- S18: Ermitteln einer zweiten Drehzahl
- S19: Ermitteln einer Änderungsrate der ermittelten Drehzahlen als zusätzliche Daten
- S20: Prüfen, ob die ermittelte Änderungsrate das zweite Kriterium erfüllt
- S21: Ermitteln von Drehwinkeldaten
- S22: Prüfen, ob die Drehwinkeldaten das erste Kriterium erfüllen
- S23: Prüfen, ob die Drehwinkeldaten konstant sind
- S24: Erkennen des Fehlerfalls

## Patentansprüche

1. Verfahren (30) zum Erkennen eines Fehlerfalls einer Motoranordnung mit einer elektrischen Maschine (2), insbesondere einem Synchronmotor, mit den Schritten:
- Ermitteln von Drehwinkeldaten (S21), die in Abwesenheit des Fehlerfalls von einem Drehwinkel eines Rotors der elektrischen Maschine abhängig sind, durch Messen eines Wertes eines Sensorsignals eines Drehwinkelsensors und durch Berechnen eines Drehwinkels basierend auf dem gemessenen Wert des Sensorsignals;
**gekennzeichnet durch,**
- Ermitteln zusätzlicher Daten (S10 - S19), die Rückschlüsse auf den Fehlerfall erlauben, wobei der Schritt des Ermittelns zusätzlicher Daten den Schritt Ermitteln einer ersten und einer zweiten Drehzahl (S13, S18) der elektrischen Maschine aufgrund der ermittelten Drehwinkeldaten umfasst, der Schritt des Ermittelns der ersten und der zweiten Drehzahl der elektrischen Maschine die Schritte umfasst:
• Ermitteln von ersten Drehwinkeldaten (S10),
• Warten für eine vorherbestimmte erste Zeitspanne (S11),
• Ermitteln von zweiten Drehwinkeldaten (S12) und
• Ermitteln der ersten Drehzahl (S13) aufgrund der ersten und zweiten Drehwinkeldaten sowie der vorherbestimmten ersten Zeitspanne,
• Warten für eine vorherbestimmte zweite Zeitspanne (S14),
• Ermitteln einer zweiten Drehzahl (S18),
• Ermitteln einer Änderungsrate (S19) der ermittelten Drehzahlen als die zusätzlichen Daten aufgrund der ersten und zweiten Drehzahl sowie der vorherbestimmten zweiten Zeitspanne, und
• Prüfen, ob die ermittelte Änderungsrate (S20) ein zweites Kriterium erfüllt, nämlich ob die ermittelte Änderungsrate einen vorherbestimmten Änderungsratenschwellwert übersteigt; und
- Erkennen des Fehlerfalls (S24), wenn die Drehwinkeldaten ein erstes Kriterium und die zusätzlichen Daten ein zweites Kriterium erfüllen, durch Prüfen, ob die Drehwinkeldaten das erste Kriterium erfüllen (S22), und, wenn die Drehwinkeldaten das erste Kriterium erfüllen, durch Prüfen, ob die Drehwinkeldaten konstant sind (S23);
- wobei das erste Kriterium erfüllt ist, wenn die Drehwinkeldaten einem vorherbestimmten Drehwinkel entsprechen, und das zweite Kriterium erfüllt ist, wenn die ermittelte Änderungsrate den vorherbestimmten Änderungsratenschwellwert übersteigt.

2. Verfahren nach Anspruch 1, wobei als Fehlerfall ein Verlust einer Verbindung eines Drehwinkelsensors zum Ermitteln von Drehwinkeldaten mit einer Masse erkannt wird.

3. Motorsteuergerät (21) zum Steuern einer elektrischen Maschine (2), insbesondere eines Synchronmotors, in einer Motoranordnung mit
- mindestens einem Eingang (8aE, 8bE) zum Empfangen von Sensorsignalen zum Ermitteln von Drehwinkeldaten, die in Abwesenheit des Fehlerfalls von einem Drehwinkel eines Rotors der elektrischen Maschine abhängig sind,
- Mitteln zum Ermitteln zusätzlicher Daten (27), die Rückschlüsse auf einen Fehlerfall der Motoranordnung erlauben, und
- einer Fehlererkennungseinheit (28) zum Erkennen des Fehlerfalls, wenn die Drehwinkeldaten ein erstes Kriterium und die zusätzlichen Daten ein zweites Kriterium erfüllen,
**dadurch gekennzeichnet, dass**
- das Motorsteuergerät eine Verarbeitungseinheit (25) und einen Datenspeicher (26) umfasst, der ein durch die Verarbeitungseinheit (25) ausführbares Programm enthält, das Instruktionen zur Ausführung der Schritte des Verfahrens nach einem der vorangehenden Ansprüche umfasst.

4. Motoranordnung mit
- einer elektrischen Maschine (2), insbesondere einem Synchronmotor, die einen Drehwinkelsensor (22) aufweist, der über eine Leitung (9b) mit einer Masse (14) verbunden ist, sowie
- einem Motorsteuergerät (21) nach Anspruch 3, das dazu eingerichtet ist, einen Verlust der Verbindung des Drehwinkelsensors (22) mit der Masse zu erkennen.

## Claims

1. Method (30) for detecting a fault in a motor arrangement with an electrical machine (2), particularly a synchronous motor, having the steps of:
- ascertainment of rotation angle data (S21) that, in the absence of the fault, are dependent on a rotation angle of a rotor of the electrical machine by measuring a value of a sensor signal from a rotation angle sensor and by calculating a rotation angle based on the measured value of the sensor signal;
**characterized by**
- ascertainment of additional data (S10-S19) that allow the fault to be inferred, wherein the step of ascertainment of additional data comprises the step of ascertainment of a first and second speed (S13, S18) of the electrical machine on the basis of the ascertained rotation angle data, the step of ascertainment of the first and the second speed of the electrical machine comprises the steps of:
• ascertainment of first rotation angle data (S10),
• waiting for a predetermined first period of time (S11),
• ascertainment of second rotation angle data (S12), and
• ascertainment of the first speed (S13) on the basis of the first and second rotation angle data and also the predetermined first period of time,
• waiting for a predetermined second period of time (S14),
• ascertainment of a second speed (S18),
• ascertainment of a rate of change (S19) of the ascertained speeds as the additional data on the basis of the first and second speeds and also the predetermined second period of time, and
• checking whether the ascertained rate of change (S20) meets a second criterion, namely whether the ascertained rate of change exceeds a predetermined rate of change threshold value; and
- detection of the fault (S24) when the rotation angle data meet a first criterion and the additional data meet a second criterion, by checking whether the rotation angle data meet the first criterion (S22), and, if the rotation angle data meet the first criterion, by checking whether the rotation angle data are constant (S23);
- wherein the first criterion is met when the rotation angle data correspond to a predetermined rotation angle, and the second criterion is met when the ascertained rate of change exceeds the predetermined rate of change threshold value.

2. Method according to Claim 1, wherein the fault detected is loss of a connection between a rotation angle sensor for ascertaining rotation angle data and a ground.

3. Motor controller (21) for controlling an electrical machine (2), particularly a synchronous motor, in a motor arrangement, having
- at least one input (8aE, 8bE) for receiving sensor signals for ascertaining rotation angle data that, in the absence of the fault, are dependent on a rotation angle of a rotor of the electrical machine,
- means for ascertaining additional data (27) that allow a fault in the motor arrangement to be inferred, and
- a fault detection unit (28) for detecting the fault when the rotation angle data meet a first criterion and the additional data meet a second criterion,
**characterized in that**
- the motor controller comprises a processing unit (25) and a data memory (26), which contains a program that can be executed by the processing unit (25) and that comprises instructions for executing the steps of the method according to one of the preceding claims.

4. Motor arrangement having
- an electrical machine (2), particularly a synchronous motor, that has a rotation angle sensor (22) that is connected to a ground (14) via a line (9b), and
- a motor controller (21) according to Claim 3 that is set up to detect loss of the connection between the rotation angle sensor (22) and the ground.

## Revendications

1. Procédé (30) pour reconnaître une situation de défaut d'un arrangement de moteur comprenant une machine électrique (2), notamment un moteur synchrone, comprenant les étapes suivantes :
- détermination de données d'angle de rotation (S21) qui, en l'absence de la situation de défaut, sont dépendantes d'un angle de rotation d'un rotor de la machine électrique, en mesurant une valeur d'un signal de capteur d'un capteur d'angle de rotation et en calculant un angle de rotation en se basant sur la valeur mesurée du signal de capteur ;
**caractérisé par**
- détermination de données supplémentaires (S10 - S19), lesquelles permettent de déduire la présence d'une situation de défaut, l'étape de détermination de données supplémentaires comprenant l'étape de détermination d'une première et d'une deuxième vitesse de rotation (S13, S18) de la machine électrique en se basant sur les données d'angle de rotation déterminées, l'étape de détermination de la première et de la deuxième vitesse de rotation de la machine électrique comprenant les étapes suivantes :
∗ détermination de premières données d'angle de rotation (S10),
∗ attente pendant un premier intervalle de temps préalablement défini (S11),
∗ détermination de deuxièmes données d'angle de rotation (S12) et
∗ détermination de la première vitesse de rotation (S13) en se basant sur les premières et deuxièmes données d'angle de rotation ainsi que sur le premier intervalle de temps préalablement défini,
∗ attente pendant un deuxième intervalle de temps préalablement défini (S14),
∗ détermination d'une deuxième vitesse de rotation (S18),
∗ détermination d'un taux de variation (S19) des vitesses de rotation déterminées en tant que données supplémentaires en se basant sur les première et deuxième vitesses de rotation ainsi que sur le deuxième intervalle de temps préalablement défini, et
∗ contrôle si le taux de variation déterminé (S20) satisfait à un deuxième critère, à savoir si le taux de variation déterminé dépasse une valeur de seuil de taux de variation préalablement définie ; et
- reconnaissance de la situation de défaut (S24) lorsque les données d'angle de rotation satisfont à un premier critère et les données supplémentaires à un deuxième critère, en contrôlant si les données d'angle de rotation satisfont au premier critère (S22) et, lorsque les données d'angle de rotation satisfont au premier critère, en contrôlant si les données d'angle de rotation sont constantes (S23) ;
- le premier critère étant satisfait lorsque les données d'angle de rotation correspondant à un angle de rotation préalablement défini et le deuxième critère étant satisfait lorsque le taux de variation déterminé dépasse la valeur de seuil de taux de variation préalablement définie.

2. Procédé selon la revendication 1, la situation de défaut reconnue étant une perte d'une liaison entre un capteur d'angle de rotation servant à déterminer des données d'angle de rotation et une masse.

3. Contrôleur de moteur (21) destiné à commander une machine électrique (2), notamment un moteur synchrone, dans un arrangement de moteur comprenant
- au moins une entrée (8aE, 8bE) destinée à recevoir des signaux de capteur servant à déterminer des données d'angle de rotation qui, en l'absence de la situation de défaut, sont dépendantes d'un angle de rotation d'un rotor de la machine électrique,
- des moyens destinés à déterminer des données supplémentaires (27) qui permettent de déduire une situation de défaut de l'arrangement de moteur, et
- une unité de reconnaissance de défaut (28) destinée à reconnaître la situation de défaut lorsque les données d'angle de rotation satisfont à un premier critère et les données supplémentaires à un deuxième critère,
**caractérisé en ce que**
- le contrôleur de moteur comprend une unité de traitement (25) et une mémoire de données (26), laquelle contient un programme qui peut être exécuté par l'unité de traitement (25) et qui comporte des instructions destinées à exécuter les étapes du procédé selon l'une des revendications précédentes.

4. Arrangement de moteur comprenant
- une machine électrique (2), notamment un moteur synchrone, qui possède un capteur d'angle de rotation (22), lequel est relié à une masse (14) par le biais d'une ligne (9b), et
- un contrôleur de moteur (21) selon la revendication 3, lequel est conçu pour reconnaître une perte de la liaison entre le capteur d'angle de rotation (22) et la masse.
